# EUROPÄISCHE PATENTSCHRIFT

(11) **EP 2 413 159 B1**
(45) Veröffentlichungstag und Bekanntmachung des Hinweises auf die Patenterteilung: **13.11.2013**
(21) Anmeldenummer: 11168837.0
(22) Anmeldetag: 06.06.2011
(51) Int. Cl.: G01S 17/02, G01B 11/24

(54) **Entfernungsmessender optoelektronischer Sensor zur Montage an einer Durchgangsöffnung**
Distance measuring optoelectronic sensor for fitting to an opening
Capteur optoélectronique mesurant l'éloignement pour le montage sur une ouverture de passage

(30) Priorität: 30.07.2010 DE 102010036775
(43) Veröffentlichungstag der Anmeldung: 01.02.2012
(73) Patentinhaber: SICK AG, 79183 Waldkirch (DE)
(72) Erfinder: Rothenberger, Bernd, 79365 Rheinhausen (DE); Haberer, Manfred, 79359 Riegel (DE)
(74) Vertreter: Hehl, Ulrich

(56) Entgegenhaltungen:
- EP-A1- 2 180 348
- DE-A1-102004 044 973
- DE-B4- 4 411 448

## Beschreibung

Die Erfindung betrifft einen entfernungsmessenden optoelektronischen Sensor zur Montage an einer Durchgangsöffnung nach dem Oberbegriff von Anspruch 1 sowie ein Verfahren zur Absicherung einer Durchgangsöffnung nach dem Oberbegriff von Anspruch 14.

In industriellen Produktionsprozessen ist es häufig nötig, die zu bearbeitenden Objekte, beispielsweise eine Fahrzeugkarosserie, automatisch aus einem für Menschen ungefährlichen Bereich in einen gefährlichen Bereich zu fördern oder umgekehrt. Während der Bearbeitungsschritte in dem gefährlichen Bereich muss der Zutritt von Personen sicher verhindert werden. Dazu können an dem Durchgang zu dem gefährlichen Bereich optoelektronische Sensoren wie Sicherheitslichtschranken oder Sicherheitslichtgitter eingesetzt werden. Die weitere Verarbeitung wird zur Verhinderung von Unfällen sofort unterbrochen, wenn eine Person den Eingangs- beziehungsweise Ausgangsbereich betritt.

Für eine intelligente Absicherung eignen sich entfernungsmessende Sensoren, die nicht nur den bloßen Objekteingriff in einen Schutzbereich erkennen, sondern zusätzliche Daten wie den Ort des Eingriffs oder Objektkonturen bereitstellen. Dazu misst der Sensor die Entfernung zwischen Sensor und dem jeweils erfassten Objektpunkt und erzeugt so tiefenaufgelöste Bildinformationen.

Zu den entfernungsmessenden Sensoren zählen Sicherheitslaserscanner, wie beispielsweise in der DE 43 40 756 A1 beschrieben. Dabei überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes aus der Lichtlaufzeit unter Verwendung der Lichtgeschwindigkeit zusätzlich auf die Entfernung des Objektes von dem Laserscanner geschlossen. Mit den Winkel- und Entfernungsangaben lässt sich der Ort eines Objektes in dem Überwachungsbereich sowie die Kontur des Objekts ermitteln. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird.

Eine andere entfernungsmessende Sensorfamilie stellen die 3D-Kameras dar, die dreidimensionale Entfernungsbilder aufnehmen, in denen also zusätzlich zu einem flachen Bild eine Entfernungs- oder Tiefeninformation gewonnen wird. 3D-Kameras setzen unterschiedliche Verfahren ein. Eines davon ist die Stereoskopie. Dabei werden Bilder der Szenerie aus leicht unterschiedlichen Perspektiven gewonnen. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet. Ein weiteres, in Lichtlaufzeitkameras eingesetztes Verfahren besteht darin, für jeden Pixel die Lichtlaufzeit bis zu den Objekten in der überwachten Szenerie zu ermitteln und daraus die Tiefeninformation zu gewinnen. Dies kann durch Aussenden von intensitätsmoduliertem Licht und Phasenmessung, auf der beispielsweise die Photomischdetektion beruht, oder durch direkte Laufzeitmessung eines Lichtpulses erfolgen. Das Grundprinzip der Entfernungsmessung einer Lichtlaufzeitkamera entspricht somit dem Laserscanner, nur dass die Lichtlaufzeit mehrfach für die einzelnen Pixel der Kamera gemessen wird. Es gibt auch noch weitere 3D-Kameraverfahren, etwa die Lichtschnittverfahren.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Eine entsprechende Norm für sichere Kameras ist in Vorbereitung. Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Bei der eingangs genannten Absicherung eines Durchgangs zu einem gefährlichen Bereich mit optoelektronischen Sensoren muss gewährleistet sein, dass die zu bearbeitenden Objekte ohne Auslösen eines sicherheitsgerichteten Nothalts den Arbeitsbereich erreichen und verlassen können. Dazu ist bekannt, die Sensoren zeitweise zu deaktivieren (Muting). Das erfordert aber zusätzliche Sensoren, um zu erkennen, wann der Sicherheitssensor gemutet werden muss, oder ein Signal von dem Transportsystem. Dies zieht einen entsprechend hohen Aufwand für die Konfiguration, Verkabelung und Inbetriebnahme der Mutingstation nach sich. Außerdem ist es oft relativ einfach möglich, unerkannt kurz vor oder nach dem Objekt oder an dessen Seite in den gefährlichen Bereich einzudringen.

Alternativ zu einer Absicherung mit Sensoren werden mechanische Mittel eingesetzt, etwa Schnelllauftore, Pendelklappen oder mechanische Silhouetten. Diese lösen aber nicht das Problem von mit dem zulässigen Objekt eindringenden Personen. Eine Silhouette beispielsweise muss zwangsläufig an das größte zulässige Objekt angepasst sein und bietet damit eine Sicherheitslücke gegenüber kleineren Objekten.

Aus der DE 44 11 448 B4 ist ein Laserscanner zur Kontrolle eines vorgegebenen Überwachungsbereichs bekannt, der eine Abstandskontur von in dem Überwachungsbereich befindlichen Objekten ermittelt. Diese Abstandskontur wird mit einer Vielzahl von gespeicherten Referenzkonturen verglichen, die erwarteten Objekten innerhalb des Überwachungsbereichs entspricht. Wird gemäß diesem Vergleich ein in dem Überwachungsbereich befindliches Objekt als zulässig erkannt, so wird kein Abschaltsignal ausgegeben. Bei dem herkömmlichen Vorgehen müssen aber ständig sämtliche gespeicherten Referenzkonturen mit dem in dem Überwachungsbereich befindlichen Objekt verglichen werden. Das ist relativ aufwändig, und zudem fließen keine Informationen über frühere Vergleiche ein, wenn dasselbe Objekt bereits in einem früheren Bewegungsstadium überprüft wurde. Dadurch wird die Überwachung langsam und fehleranfällig.

Die DE 10 2004 044 973 A1 offenbart eine Kontrolle eines Überwachungsbereichs an einer Transporteinrichtung. In von einem Laserscanner erzeugten Objektpunkten wird eine Kontursuche durchgeführt, um festzustellen, ob eine vorgegebene Modelllinie eines in dem Überwachungsbereich zugelassenen Gegenstands erkannt werden kann. Gelingt das nicht, so wird dies als sicherheitsrelevanter Objekteingriff gewertet und ein Abschaltsignal ausgegeben. Auf diese Weise können beispielsweise Papierrollen mit ihrer charakteristischen runden Kontur als zulässig erkannt werden. Für allgemeine Objekte ist eine Modellinie keine hinreichende Basis für eine zuverlässige Überprüfung.

Es ist daher Aufgabe der Erfindung, ein einfaches und flexibles Sicherheitssystem für die Absicherung eines Durchgangs anzugeben, welches sowohl die schnelle Klassifikation als auch die Zulässigkeitsprüfung hindurchbewegter Objekte erlaubt.

Diese Aufgabe wird durch einen entfernungsmessenden optoelektronischen Sensor gemäß Anspruch 1 sowie ein Verfahren zur Absicherung einer Durchgangsöffnung gemäß Anspruch 14 gelöst. Dabei geht die Erfindung von dem Grundgedanken aus, Objekte in der Durchgangsöffnung anhand gespeicherter bekannter Objekte zu bewerten. Dazu wird für die endliche Anzahl der bekannten, zulässigen Objekte zunächst angenommen, dass sie mit einem zu prüfenden Objekt in der Durchgangsöffnung übereinstimmen. Solange diese Annahme noch für zumindest eines der bekannten Objekte aufrecht erhalten werden kann, erfolgt keine Absicherung der Durchgangsöffnung. Eine Absicherung erfolgt erst, sobald durch Vergleich der Bildinformationen des zu prüfenden Objekts mit Referenzkonturinformationen der bekannten Objekte auch das letzte als zulässig bekannte Objekt ausgeschlossen wurde.

Die Erfindung hat den Vorteil, dass mit Erfassung eines Objekts in der Durchgangsöffnung das Objekt zugleich auch identifiziert wird. Zusätzlich zu der Absicherung wird eine 3D-Verifikation von Objekten und Objektoberflächen ermöglicht. Anders als bei Muting-Stationen ist keine zusätzliche Sensorik erforderlich. Das Eindringen von Personen wird zuverlässig auch dann erkannt, wenn sie gemeinsam mit einem an sich zulässigen Objekt die Durchgangsöffnung zu passieren suchen. Durch den ständigen Ausschluss von nicht mehr in Frage kommenden bekannten Objekten erfolgt eine besonders schnelle und zuverlässige Erkennung, die auch während der Bewegung erfasste Vorinformationen ausnutzt.

Grundsätzlich ist denkbar, auch einen Vergleich mit unzulässigen bekannten Objekten durchzuführen. Sobald dann für ein zu prüfendes Objekt sämtliche zulässigen bekannten Objekte ausgeschlossen wurden, erfolgt die Absicherung.

Zu dem Vergleich von Bildinformationen mit Referenzkonturinformationen werden die aktuell erfassten Bildinformationen des im Erfassungsbereich befindlichen Objektabschnitts eines zu prüfenden Objekts verwendet. Zusätzlich können aber auch Bildinformationen eines in einem früheren Bewegungsstadium erfassten Objektabschnitts desselben Objekts herangezogen werden.

Die Toleranzschwelle des Vergleichs zwischen Bildinformation und Referenzkonturinformation wird je nach Anwendungsfall gesetzt. Der Unterschied muss kleiner sein als das kleinste Objekt, dessen Eindringen verhindert werden soll, also beispielsweise kleiner als eine Person oder als ein menschliches Körperteil.

Die Auswertungseinheit ist bevorzugt dafür ausgebildet, in einer Vorauswahl bekannte Objekte vorab als mit dem zu prüfenden Objekt übereinstimmend auszuschließen. Somit wird die Übereinstimmung eines zu prüfenden Objekts mit einem bekannten Objekt nicht für alle bekannten Objekte auf Basis eines Vergleichs der Bildinformationen mit Referenzkonturinformationen ausgeschlossen. Stattdessen verbleibt für diese Prüfung nur eine Vorauswahl von bekannten Objekten, die überhaupt in Frage kommen. Damit wird der Aufwand für den Vergleich reduziert und die Erkennungssicherheit weiter erhöht. Im Extremfall verbleibt nur ein einziges vorausgewähltes Objekt.

Die Auswertungseinheit ist besonders bevorzugt dafür ausgebildet, die Vorauswahl unabhängig von Bildinformationen des zu prüfenden Objekts zu treffen. Die Vorauswahl nutzt dabei unabhängiges Vorwissen, kennt beispielsweise die zu erwartenden Objekte aus dem Produktionsablauf, oder ein vorgeschalteter Sensor erfasst bereits vorab die zu prüfenden Objekte und schließt so bestimmte bekannte Objekte aus.

Vorteilhafterweise ist die Auswertungseinheit dafür ausgebildet, bei dem Vergleich der Bildinformationen und der Referenzkonturinformationen ein Übereinstimmungsmaß zu ermitteln. Für alle bekannten Objekte lässt sich daraus eine Wahrscheinlichkeit ableiten, dass es sich bei dem zu prüfenden Objekt um dieses bekannte Objekt handelt. Dies ermöglicht relative Vergleiche bei der Klassifikation des zu prüfenden Objekts sowie Diagnosen.

Besonders bevorzugt ist die Auswertungseinheit dafür ausgebildet, bei Überschreitung einer Mindestähnlichkeitsschwelle des Übereinstimmungsmaßes für ein bekanntes

Objekt sämtliche anderen bekannten Objekte auszuschließen. Dies entspricht einer Winner-Takes-All-Strategie bei der Klassifikation, bei dem das wahrscheinlichste bekannte Objekt alle anderen bekannten Objekte ausschließt. Besonders geeignet ist dieses Vorgehen kurz nach dem Eindringen des Objekts in die Durchgangsöffnung. Damit wird letztlich auch ein Art Vorauswahl getroffen, die aber schon auf den Bildinformationen des Sensors beruht. Um ein Überschreiten der Mindestähnlichkeitsschwelle kurz nach dem Eindringen zu erzwingen, kann die Mindestähnlichkeitsschwelle nach erster Erfassung eines zu prüfenden Objekts langsam abgesenkt werden, oder die Mindestähnlichkeitsschwelle wird relativ definiert.

Die Auswertungseinheit ist bevorzugt dafür ausgebildet, bei dem Vergleich der Bildinformationen mit den Referenzkonturinformationen Verschiebungen und/oder Drehungen zwischen dem bekannten Objekt und dem zu prüfenden Objekt zu berücksichtigen. Damit entsteht eine höhere Flexibilität, besonders wenn die Objekte die Durchgangsöffnung nicht zwangsgeführt passieren. Die derart bekannte Position und Drehlage des zu prüfenden Objekts kann zudem in nachgelagerten Bearbeitungsschritten ausgenutzt werden.

Bevorzugt ist ein Geschwindigkeitssensor vorgesehen, um das Bewegungsprofil des Objekts durch die Durchgangsöffnung zu ermitteln, oder der Auswertungseinheit ist ein Bewegungsprofil des Objekts vorgegeben. Letzteres trifft beispielsweise an einem Förderer zu, dessen Förderverhalten bekannt oder von einer Förderersteuerung ausgebbar ist. Häufig ist das Bewegungsprofil lediglich eine gleichförmige Bewegung in einer Richtung, aber auch kompliziertere Bewegungsprofile sind verarbeitbar. Durch das bekannte Bewegungsprofil sind die Freiheitsgrade bei der Zuordnung der Bildinformationen zu den Referenzkonturinformationen deutlich reduziert, und dies führt zu einer schnelleren und robusteren Auswertung. Das gilt besonders für nicht zwangsgeführte zu prüfende Objekte, wo die Erkennung von Position und Drehlage aufgrund der durch das Bewegungsprofil bekannten Randbedingungen deutlich vereinfacht wird.

Die Auswertungseinheit ist bevorzugt für einen Einlernmodus ausgebildet, in dem Objekte durch die Durchgangsöffnung bewegt werden, die dann mit aus während der Bewegung aufgezeichneten Bildinformationen erzeugten Referenzkonturinformationen als bekannte Objekte in der Speichereinheit abgelegt werden. So wird die Datenbank der bekannten Objekte auf einfache Weise anfänglich erstellt beziehungsweise zu jedem Zeitpunkt erweitert. Dazu sind keinerlei Programmierkenntnisse erforderlich.

Der Sensor weist bevorzugt einen Eingang für ein Durchfahrtssignal auf, über welches Zeitabschnitte signalisierbar sind, in denen keine zulässigen Objekte in der Durchgangsöffnung zu erwarten sind. Beispielsweise kann an einem Förderer das übliche Intervall zwischen Fördergütern vorgegeben sind. Eingriffe zwischen zwei solchen Objekten sind dann unabhängig von der Objektkontur unzulässig. Der Sensor kann deshalb beispielsweise in diesen Zeitintervallen zwischen zwei möglichen zulässigen Objekten den Konturvergleich gänzlich einstellen und auf jeglichen Objekteingriff in die Durchtrittsöffnung mit einer Warnung oder Absicherung reagieren.

Die Auswertungseinheit ist bevorzugt dafür ausgebildet, die Bildinformationen eines jeweiligen Objektabschnitts zu speichern und so stückweise Bildinformationen von Objektanteilen zusammenzusetzen, welche die Durchgangsöffnung bereits passiert haben. Dieses Vorgehen führt beispielsweise bei einem zweidimensionalen Scanner dazu, dass die zu unterschiedlichen Zeitpunkten aufgenommenen Scanebenen scheibchenweise zu einer dreidimensionalen Gesamtkontur des bisher durch die Durchgangsöffnung bewegten Objektanteils zusammengesetzt werden. Auf Basis einer Positions- und Drehlagebestimmung entsteht so ein 3D-Modell des prüfenden Objekts, welches mit den Referenzkonturinformationen wesentlich genauer vergleichbar ist als nur eine zweidimensionale Scheibe, die sich aktuell in dem Erfassungsbereich befindet.

Vorteilhafterweise ist ein Objektausgang oder eine Anzeige vorgesehen, um für ein durch die Durchgangsöffnung bewegtes Objekt alle als das zu prüfende Objekt noch in Frage kommenden bekannten Objekte und/oder das wahrscheinlichste bekannte Objekt auszugeben. Damit kann die Identität des zu prüfenden Objekts überwacht oder für andere Bearbeitungsschritte ausgenutzt werden.

Der Sensor ist bevorzugt als Laserscanner ausgebildet und weist einen Lichtsender zum Aussenden eines Lichtstrahls in die Durchgangsöffnung, einen Lichtempfänger zum Erzeugen eines Empfangssignals aus dem von Objekten in der Durchgangsöffnung remittierten Lichtstrahl sowie eine bewegliche Ablenkeinheit zur periodischen Abtastung der Durchgangsöffnung auf. Denkbar sind auch mehrere miteinander verbundene Scanner, die sich in ihrem Sichtwinkel und ihrer Position gegenseitig ergänzen.

Der Sensor ist alternativ als 3D-Kamera ausgebildet. Dabei kommen unterschiedliche 3D-Verfahren in Betracht, beispielsweise eine Stereokamera mit zwei Bildsensoren und einer Stereoskopieeinheit, in welcher aus Bilddaten der beiden Bildsensoren eine stereoskopische Entfernungsberechnung aufführbar ist, oder eine Lichtlaufzeitkamera mit einem Lichtsender, einem Bildsensor und einer Lichtlaufzeitmesseinheit, mittels derer für jeden Pixel des Bildsensors eine Lichtlaufzeit zwischen Aussenden eines Lichtstrahls von dem Lichtsender und Registrieren des Lichtstrahls in dem Pixel bestimmbar ist. Diese 3D-Kamera hat einen oder mehrere Bildsensoren mit zu einer Matrix angeordneten Pixeln. Denkbar sind auch lediglich zeilenförmige Bildsensoren. Der Erfassungsbereich ist dann eine Ebene analog zur Scanebene eines Laserscanners. Während der Relativbewegung gegenüber dem Objekt erfasst diese Ebene nach und nach die gesamte dreidimensionale Objektkontur.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines Laserscanners als Beispiel eines erfindungsgemäßen entfernungsmessenden optoelektronischen Sensors;
- Fig. 2: eine dreidimensionale Ansicht einer Durchgangsöffnung, in welcher Sensoren gemäß Figur 1 montiert sind;
- Fig. 3: eine Seitenansicht einer Durchgangsöffnung zur Veranschaulichung der erfindungsgemäßen Erfassung und Klassifikation von zulässigen Objekten; und
- Fig. 4: ein Ablaufschema zur Erläuterung der Erfassung und Klassifikation.

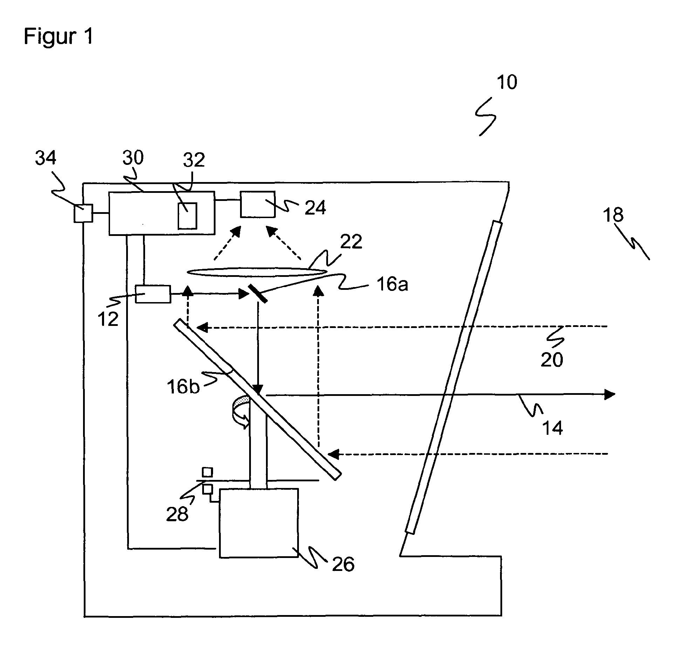

Figur 1 zeigt eine schematische Schnittdarstellung durch einen erfindungsgemäßen optoelektronischen Sensor, der beispielhaft als Sicherheitsscanner 10 ausgebildet ist. Alternativ kann der Sensor auch einer der einleitend genannten anderen entfernungsmessenden Sensoren sein. Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitsscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird ein von dem Lichtempfänger 24 empfangenes reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Sicherheitsscanner 10 geschlossen. Diese Auswertung erfolgt in einer Auswertungseinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objektpunkte in dem Überwachungsbereich 18 als entfernungsaufgelöste Bildinformationen der zu dem Sicherheitsscanner 10 gerichteten Kontur des Objekts zur Verfügung.

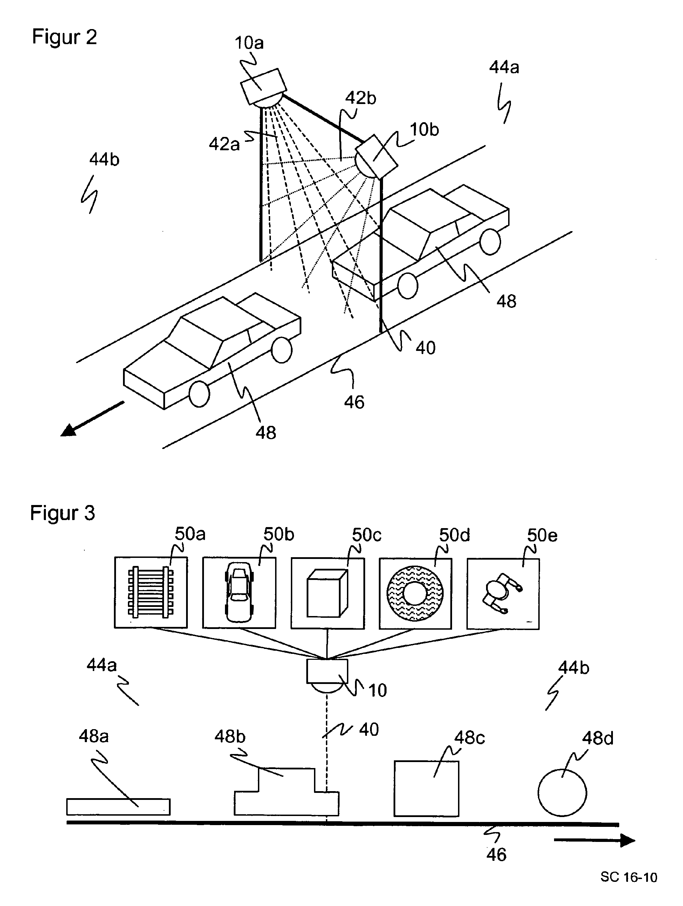

Die Auswertungseinheit 30 erfasst anhand der Bildinformationen in einer weiter unten anhand der Figuren 2 bis 4 noch zu beschreibenden Weise Objekte in dem Überwachungsbereich 18 und entscheidet anhand von Referenzdaten in einem Speicher 32, ob diese Objekte zulässig sind oder nicht. Wird ein unzulässiges Objekt erkannt, so gibt der Sicherheitsscanner 10 über einen sicheren Ausgang 34 (OSSD, Output Signal Switching Device) ein sicherheitsgerichtetes Abschaltsignal aus. Alternativ erfolgt diese Objekterkennung in einer nicht dargestellten externen Auswertungseinheit. Der Ausgang 34 oder ein zusätzlicher, nicht dargestellter Ausgang ermöglicht dann die Ausgabe von Bildinformationen an die externe Auswertungseinheit.

Figur 2 zeigt in einer dreidimensionalen Darstellung die Montage zweier Sicherheitslaserscanner 10a, 10b an einer Durchgangsöffnung 40. Die Scanebenen 42a-b der beiden Sicherheitslaserscanner 10a-b sind mit gestrichelten beziehungsweise gepunkteten Linien dargestellt und decken die Durchgangsöffnung 40 ab. Die Sicherheitslaserscanner 10a-b sind miteinander verbunden und zueinander registriert, so dass die Bildinformationen in einem gemeinsamen Weltkoordinatensystem auswertbar sind. Effektiv verhält sich damit der Verbund der Sicherheitslaserscanner 10a-b aus funktionaler Sicht wie ein einziger Sensor mit verbessertem Sichtbereich. Abweichend kann auch nur ein einziger Sensor beispielsweise mittig in der Durchgangsöffnung 40 montiert werden, oder es werden zusätzliche Sensoren zur nochmals verbesserten Erfassung der Durchgangsöffnung 40 eingesetzt.

Die Durchgangsöffnung 40 trennt einen Bereich 44a eines Fördersystems 46 von einem Bereich 44b. Ein Durchtritt durch die Durchgangsöffnung 40 soll nur bestimmten Objekten 48 erlaubt werden. Erkennen die Sicherheitslaserscanner 10a-b ein anderes Objekt, insbesondere eine Person, so wird eine Absicherung eingeleitet, um beispielsweise das Fördersystem 46 oder Bearbeitungsmaschinen in einem der Bereiche 44a-b still zu setzen. Das Fördersystem 46 muss nicht zwingend spurgeführt sein. Die Erfindung kann auch an einer Durchgangsöffnung 40 eingesetzt werden, an der sich Objekte frei bewegen.

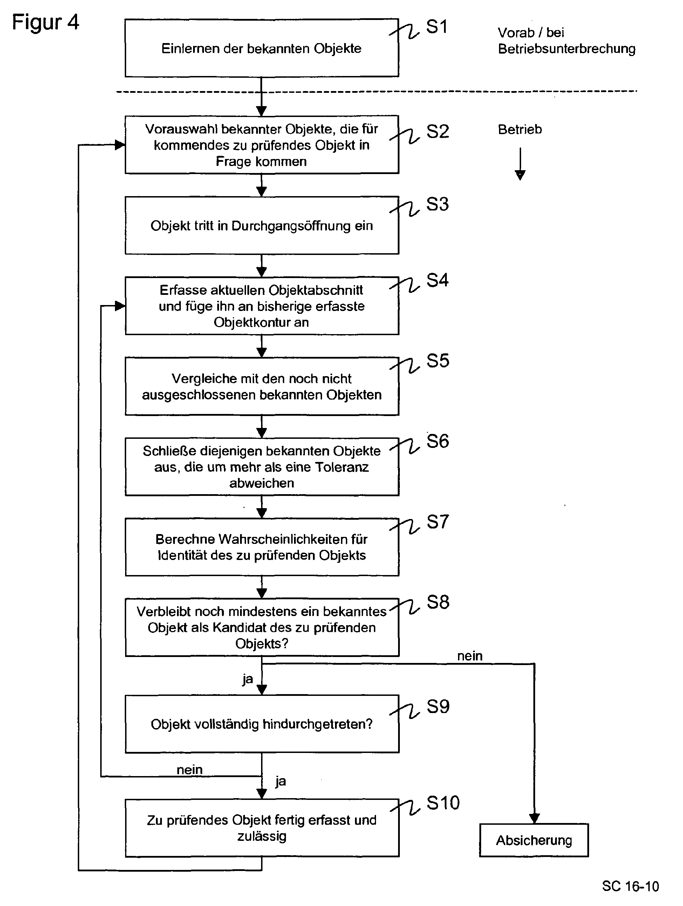

Figur 3 zeigt die Durchgangsöffnung 40 in einer Seitenansicht. Das Objekt 48b, welches sich gerade in der Durchgangsöffnung 40 befindet, wird mit dem sogleich anhand der Figur 4 erklärten Verfahren auf Zulässigkeit in dem Bereich 44b geprüft. Zusammenfassend sind dazu in dem Sicherheitsscanner 10 Referenzkonturen von möglichen Objekten 50a-e in einer Datenbank gespeichert. Während der Durchfahrt des Objekts 48b wird die Kontur des aktuell von dem Sicherheitsscanner 10 erfassten Objektabschnitts sowie zuvor während der Bewegung erfasster Objektabschnitte mit den Referenzkonturen verglichen. Es erfolgt erst dann eine Absicherung, wenn aufgrund dieses Vergleichs alle bekannten zulässigen Objekte 50a-d ausgeschlossen sind. Das Objekt 50e ist ein Beispiel für ein unzulässiges bekanntes Objekt: Sobald für das zu prüfende Objekt 48b nur noch unzulässige bekannte Objekte 50e in Frage kommen, wird ebenfalls abgesichert.

Figur 4 zeigt ein Ablaufschema der Objekterfassung und -klassifikation in der Auswertungseinheit 30. Vorab wird in einem ersten Schritt S1 die Datenbank bekannter Objekte 50a-e erstellt und in dem Speicher 32 abgelegt. Dazu passiert jedes Objekt 50a-e in einem Einlernmodus die Durchgangsöffnung 40. Es wird zu jedem der Objekte 50a-e eine Identifikation, beispielsweise ein Name, und eine Information über die Zulässigkeit gespeichert. Im Beispiel der Figur 3 sind die Palette 50a, die Fahrzeugkarosserie 50b, die Kiste 50c und das Rad 50d zulässige Objekte, während die Person 50e unzulässig ist. Weiterhin erfasst der Sicherheitsscanner 10 während des Passierens scheibchenweise die Objektkontur, so dass zu jedem Objekt 50a-e auch die erforderlichen Referenzkonturinformationen in der Datenbank abgelegt werden. Ein zusätzliches Einlernen weiterer Objekte 50a-e ist auch später während Betriebsunterbrechungen möglich. Das wird auch dann erforderlich, wenn sich die Objekte 50a-e im Laufe der Zeit verändern, etwa durch einen neuen Produktionsablauf.

In einem optionalen zweiten Schritt S2 wird für ein kommendes zu prüfendes Objekt 48b eine Vorauswahl aus den bekannten Objekten 50a-e getroffen. Es kann beispielsweise aus dem Produktionsablauf bekannt sein, dass nur bestimmte Objekte 50a-e oder sogar nur ein einziges Objekt 50a-e zu erwarten ist. Durch Eingrenzung der bekannten Objekte 50a-e werden dann Fehlerquellen der Erfassung beseitigt, und die Auswertung wird beschleunigt. Die Vorauswahl kann sowohl für den gesamten Betrieb als auch nur für einzelne oder mehrere erwartete Objekte 48a-d erfolgen.

Ein zu prüfendes Objekt 48b tritt dann während des Betriebs in einem dritten Schritt S3 in den Erfassungsbereich des Sicherheitsscanner 10 ein.

Die Objektkontur des Objektabschnitts innerhalb der Durchgangsöffnung 40 wird in einem vierten Schritt S4 erfasst und an eine seit dem Eintritt des Objekts 48b in die Durchgangsöffnung erfasste Objektkontur angefügt. Alternativ findet keine Zusammenfügung der einzelnen Erfassungen statt, sondern es wird jeweils nur mit den aktuell aufgenommenen Bilddaten des Objekts 48b gearbeitet. Für die Erfassung wird vorausgesetzt, dass die Oberflächenbeschaffenheit der Objekte 48a-d eine Laserscannermessung erlaubt. Weiterhin wird eine Höchstgeschwindigkeit der Objekte 48a-d unterstellt, so dass der Laserscanner die Abtastung ohne geometrische Unterabtastung in Bewegungsrichtung leisten kann.

Diese erfasste Objektkontur wird in einem fünften Schritt S5 in Echtzeit mit der Referenzkontur aller bekannten Objekte 50a-e der Datenbank verglichen, die für die Identität des zu prüfenden Objekts 48b noch in Frage kommen. Das sind alle bekannten Objekte 50a-e, die noch nicht entweder aufgrund Vorauswahl in Schritt S2 oder wegen eines zu einem früheren Zeitpunkt gescheiterten Vergleichs mit einer Referenzkontur ausgeschlossen wurden. Für den Vergleich wird die Position auf dem bekannten Objekt 50a-e geschätzt. Dazu wird beispielsweise ein Partikelfilter mit Nebenbedingungen oder ein Korrelator eingesetzt. Dadurch ist ein beliebiger Stop-and-Go-Betrieb möglich.

Die Konturprüfung findet in einem sechsten Schritt S6 an der geschätzten Position des bekannten Objekts 50a-e gegenüber einer Toleranzschwelle statt. Passen die aktuell erfassten Daten des Objekts 48b nicht zu dem bekannten Objekt 50a-e, weichen also um mehr als die Toleranzgrenze voneinander ab, so wird das jeweilige abweichende bekannte Objekt 50a-e als Kandidat für die Identität des prüfenden Objekts 48b ausgeschlossen. Grundsätzlich sind bei dem Vergleich drei Freiheitsgrade der Translation und drei Freiheitsgrade der Rotation zu beachten. Um die erforderliche Rechenleistung zu begrenzen, können Randbedingungen angenommen werden. Beispielsweise legt eine feste Transporthöhe den Translationsfreiheitsgrad in vertikaler Richtung fest. Durch Fahrtrichtung, Geschwindigkeitsprofil oder erzwungene Drehrichtungen beziehungsweise Positionen der Objekte 48 auf dem Fördersystem 46 können weitere Einschränkungen vorgenommen werden. Mehr als drei Freiheitsgrade sind in Echtzeit mit heutigen Rechenleistungen schwer zu beherrschen, wobei dies angesichts von Hochleistungsrechnern eine fließende Grenze ist.

In einem optionalen siebten Schritt S7 werden Übereinstimmungswahrscheinlichkeiten der verbleibenden in Frage kommenden bekannten Objekte 50a-e berechnet. Diese Wahrscheinlichkeiten können auch angezeigt oder ausgegeben werden. Beispielsweise werden ausgeschlossene Objekte 50a-e rot, das oder die Objekte 50a-e mit der derzeit größten Übereinstimmung grün und zweifelhafte Objekte 50a-e gelb angezeigt.

Danach wird in einem achten Schritt S8 geprüft, ob noch zumindest ein bekanntes Objekt 50a-e als Kandidat für die Identität des zu prüfenden Objekts 48b verbleibt. Erst wenn es kein solches Objekt 50a-e mehr gibt, wird über den Sicherheitsausgang 34 ein Absicherungssignal ausgegeben und damit die entsprechende Maßnahme eingeleitet, sei es lediglich eine Warnung oder eine sicherheitsgerichtete Abschaltung einer gefahrbringenden Maschine.

Falls in einem neunten Schritt S9 das gesamte Objekt 48b die Durchgangsöffnung 40 passiert hat, ohne dass sämtliche bekannten Objekte 50a-e als mögliche Kandidaten für dessen Identität ausgeschlossen wurden, hat das Objekt 48b in einem zehnten Schritt S10 ohne Sicherungsmaßnahme den Bereich 44b als zulässiges Objekt erreicht. Das Verfahren wird dann im Schritt S2 mit dem nächsten zu prüfenden Objekt 48b wiederholt. Sofern das Objekt 48b die Durchgangsöffnung 40 noch nicht passiert hat, wird die Überwachung für jeden weiteren Objektabschnitt, welcher die Durchgangsöffnung passiert, im Schritt S4 fortgesetzt.

## Patentansprüche

1. Entfernungsmessender optoelektronischer Sensor (10) zur Montage an einer Durchgangsöffnung (40), der dafür ausgebildet ist, in Echtzeit tiefenaufgelöste Bildinformationen desjenigen Objektabschnitts eines durch die Durchgangsöff-nung (40) bewegten Objektes (48) zu gewinnen, der sich jeweils in dem Erfassungsbereich des Sensors (10) befindet, mit einer Speichereinheit (32), welche mehrere bekannte Objekte (50) und deren Referenzkonturinformationen hält, sowie mit einer Auswertungseinheit (30), die dafür ausgebildet ist, die Bildinformationen und die Referenzkonturinformationen zu vergleichen, um zu entscheiden, ob ein zu prüfendes, in der Durchgangsöffnung (40) befindliches Objekt (48) dort zulässig ist, wobei der Sensor (10) einen Sicherheitsausgang (34) aufweist, über den ein Absicherungssignal ausgebbar ist, wenn das zu prüfende Objekt (48) nicht in der Durchgangsöffnung (40) zulässig ist,
**dadurch gekennzeichnet,**
**dass** die Auswertungseinheit (30) dafür ausgebildet ist, für die bekannten zulässigen Objekte zunächst anzunehmen, dass sie mit einem zu prüfenden Objekt in der Durchgangsöffnung übereinstimmen, und während der Bewegung des Objekts (48) durch die Durchgangsöffnung (40) wiederholt, solange das Objekt (48) die Durchgangsöffnung (40) noch nicht passiert hat, jeweils eine Kontur des aktuell den Sensor (10) passierenden Objektabschnitts mit den Referenzkonturen aller bekannten Objekte (50) zu vergleichen, die für die Identität des zu prüfenden Objekts (48) noch in Frage kommen und jeweils solche bekannte Objekte (50) auszuschließen, bei denen der Vergleich der Bildinformationen und der Referenzkonturinformationen Unterschiede jenseits einer Toleranzschwelle ergibt, wobei so lange kein Absicherungssignal ausgegeben wird, wie für das zu prüfende Objekt (48) noch zumindest ein bekanntes zulässiges Objekt (50) in Frage kommt, wobei ein bekanntes Objekt dann in Frage kommt, wenn es noch nicht ausgeschlossen wurde.

2. Sensor (10) nach Anspruch 1,
wobei die Auswertungseinheit (30) dafür ausgebildet ist, in einer Vorauswahl bekannte Objekte (50) vorab als mit dem zu prüfenden Objekt (48) übereinstimmend auszuschließen.

3. Sensor (10) nach Anspruch 2,
wobei die Auswertungseinheit (30) dafür ausgebildet ist, die Vorauswahl unab-hängig von Bildinformationen des zu prüfenden Objekts (48) zu treffen.

4. Sensor (10) nach einem der vorhergehenden Ansprüche,
wobei die Auswertungseinheit (30) dafür ausgebildet ist, bei dem Vergleich der Bildinformationen und der Referenzkonturinformationen ein Übereinstimmungsmaß zu ermitteln.

5. Sensor (10) nach Anspruch 4,
wobei die Auswertungseinheit (30) dafür ausgebildet ist, bei Überschreitung einer Mindestähnlichkeitsschwelle des Übereinstimmungsmaßes für ein bekanntes Objekt (50) sämtliche anderen bekannten Objekte (50) auszuschließen.

6. Sensor (10) nach einem der vorhergehenden Ansprüche,
wobei die Auswertungseinheit (30) dafür ausgebildet ist, bei dem Vergleich der Bildinformationen mit den Referenzkonturinformationen Verschiebungen und/oder Drehungen zwischen dem bekannten Objekt (50) und dem zu prüfenden Objekt (48) zu berücksichtigen.

7. Sensor (10) nach einem der vorhergehenden Ansprüche,
wobei ein Geschwindigkeitssensor vorgesehen ist, um das Bewegungsprofil des Objekts (48) durch die Durchgangsöffnung (50) zu ermitteln, oder wobei der Auswertungseinheit (30) ein Bewegungsprofil des Objekts (48) vorgegeben ist.

8. Sensor (10) nach einem der vorhergehenden Ansprüche,
wobei die Auswertungseinheit (30) für einen Einlernmodus ausgebildet ist, in dem Objekte (48) durch die Durchgangsöffnung (40) bewegt werden, die dann mit aus während der Bewegung aufgezeichneten Bildinformationen erzeugten Referenzkonturinformationen als bekannte Objekte (50) in der Speichereinheit (32) abgelegt werden.

9. Sensor (10) nach einem der vorhergehenden Ansprüche,
wobei der Sensor (10) einen Eingang für ein Durchfahrtssignal aufweist, über welches Zeitabschnitte signalisierbar sind, in denen keine zulässigen Objekte (50) in der Durchgangsöffnung (40) zu erwarten sind.

10. Sensor (10) nach einem der vorhergehenden Ansprüche,
wobei die Auswertungseinheit (30) dafür ausgebildet ist, die Bildinformationen eines jeweiligen Objektsabschnitts zu speichern und so stückweise Bildinformationen von Objektanteilen zusammenzusetzen, welche die Durchgangsöffnung (40) bereits passiert haben.

11. Sensor (10) nach einem der vorhergehenden Ansprüche,
wobei ein Objektausgang oder eine Anzeige vorgesehen ist, um für ein durch die Durchgangsöffnung (40) bewegtes Objekt (48) alle als das zu prüfende Objekt (48) noch in Frage kommenden bekannten Objekte (50) und/oder das wahrscheinlichste bekannte Objekt (50) auszugeben.

12. Sensor (10) nach einem der vorhergehenden Ansprüche,
der als Laserscanner ausgebildet ist und einen Lichtsender (12) zum Aussenden eines Lichtstrahls (14) in die Durchgangsöffnung (40), einen Lichtempfänger (24) zum Erzeugen eines Empfangssignals aus dem von Objekten (48) in der Durchgangsöffnung (40) remittierten Lichtstrahl (20) sowie eine bewegliche Ablenkeinheit (16) zur periodischen Abtastung der Durchgangsöffnung (40) aufweist.

13. Sensor (10) nach einem der vorhergehenden Ansprüche,
der als 3D-Kamera ausgebildet ist, insbesondere als Stereokamera mit zwei Bildsensoren und einer Stereoskopieeinheit, in welcher aus Bilddaten der beiden Bildsensoren eine stereoskopische Entfernungsberechnung aufführbar ist, oder als Lichtlaufzeitkamera mit einem Lichtsender, einem Bildsensor und einer Lichtlaufzeitmesseinheit, mittels derer für jeden Pixel des Bildsensors eine Lichtlaufzeit zwischen Aussenden eines Lichtstrahls von dem Lichtsender und Registrieren des Lichtstrahls in dem Pixel bestimmbar ist.

14. Verfahren zur Absicherung einer Durchgangsöffnung (40), bei dem abschnittsweise und in Echtzeit mit Hilfe eines entfernungsmessenden optoelektronischen Sensors (10) tiefenaufgelöste Bildinformationen eines durch die Durchgangsöffnung (40) bewegten Objektes (48) gewonnen werden, wobei die Bildinformationen mit Referenzkonturinformationen bekannter Objekte (50) verglichen werden, um zu entscheiden, ob ein zu prüfendes, in der Durchgangsöffnung (40) befindliches Objekt (48) dort zulässig ist, und wobei ein Absicherungssignal ausgegeben wird, wenn das zu prüfende Objekt (48) nicht in der Durchgangsöffnung (40) zulässig ist,
**dadurch gekennzeichnet,**
**dass** für die bekannten zulässigen Objekte zunächst angenommen wird, dass sie mit einem zu prüfenden Objekt in der Durchgangsöffnung übereinstimmen, dass während der Bewegung des Objekts (48) durch die Durchgangsöffnung (40) wiederholt, solange das Objekt (48) die Durchgangsöffnung (40) noch nicht passiert hat, jeweils eine Kontur des aktuell den Sensor (10) passierenden Objektabschnitts mit den Referenzkonturen aller bekannten Objekte (50) verglichen wird, die für die Identität des zu prüfenden Objekts (48) noch in Frage kommen und jeweils solche bekannte Objekte (50) ausgeschlossen werden, bei denen der Vergleich der Bildinformationen und der Referenzkontur-informationen Unterschiede jenseits einer Toleranzschwelle ergibt, und dass so lange kein Absicherungssignal ausgegeben wird, wie für das zu prüfende Objekt (48) noch zumindest ein bekanntes zulässiges Objekt (50) in Frage kommt, wobei ein bekanntes Objekt dann in Frage kommt, wenn es noch nicht ausgeschlossen wurde.

## Claims

1. A distance measuring optoelectronic sensor (10) for mounting at a passage opening (40), which is configured to acquire in real time depth-resolved image information of that object section of an object (48) moved through the passage opening (48), which is in each case located in the detection zone of the sensor (10), having a memory unit (32) which holds a plurality of known objects (50) and their reference contour information as well as having an evaluation unit (30) which is configured to compare the image information and the reference contour information to decide whether an object (48) to be checked which is located in the passage opening (40) is permitted there, wherein the sensor (10) has a safety output (34) via which a securing signal can be output if the object (48) to be checked is not permitted in the passage opening (40),
**characterised in that**
the evaluation unit (30) is configured first to assume for the known permitted objects that they coincide with an object to be checked in the passage opening and, during the movement of the object (48) through the passage opening (40), repeatedly to compare a respective contour of the object section currently passing the sensor (10) with the reference contours of all known objects (50), which can still be considered for the identity of the object (48) to be checked, for as long as the object (48) has not yet passed the passage opening (40) and in each case to exclude those known objects (50) for which the comparison of the image information and the reference information produces differences beyond a tolerance threshold, with no securing signal being output for as long as at least one known permitted object (50) can be considered for the object (48) to be checked, with a known object being considered when it has not yet been excluded.

2. A sensor (10) in accordance with claim 1,
wherein the evaluation unit (30) is configured to exclude known objects (50) in advance in a pre-selection as corresponding with the object (48) to be checked.

3. A sensor (10) in accordance with claim 2,
wherein the evaluation unit (30) is configured to make the pre-selection independently of image information of the object (48) to be checked.

4. A sensor (10) in accordance with any one of the preceding claims,
wherein the evaluation unit (30) is configured to determine a degree of correspondence in the comparison of the image information and of the reference contour information.

5. A sensor (10) in accordance with claim 4,
wherein the evaluation unit (30) is configured to exclude all other known objects (50) on the exceeding of a minimum similarity threshold of the degree of correspondence for a known object (50).

6. A sensor (10) in accordance with any one of the preceding claims,
wherein the evaluation unit (30) is configured to take account of displacements and/or rotations between the known object (50) and the object (48) to be checked in the comparison of the image information with the reference contour information.

7. A sensor (10) in accordance with any one of the preceding claims, wherein a speed sensor is provided to determine the movement profile of the object (48) through the passage opening (50); or wherein a movement profile of the object (48) is predefined for the evaluation unit (30).

8. A sensor (10) in accordance with any one of the preceding claims, wherein the evaluation unit (30) is configured for a teaching mode in which objects (48) are moved through the passage opening (40) which are then stored as known objects (50) in the memory unit (32) with reference contour information produced from image information recorded during the movement.

9. A sensor (10) in accordance with any one of the preceding claims, wherein the sensor (10) has an input for a transit signal via which time sections can be signalled in which no permitted objects (50) are to be expected in the passage opening (40).

10. A sensor (10) in accordance with any one of the preceding claims, wherein the evaluation unit (30) is configured to store the image information of a respective object section and thus to compose image information of object portions piece-by-piece which have already passed the passage opening (40).

11. A sensor (10) in accordance with any one of the preceding claims, wherein an object output or a display is provided to output all known objects (50) still to be considered as the object (48) to be checked and/or the most probable known object (50) for an object (48) moved through the passage opening (40).

12. A sensor (10) in accordance with any one of the preceding claims, which is configured as a laser scanner and has a light transmitter (12) for transmitting a light beam (14) into the passage opening (40), a light receiver (24) for producing a reception signal from the light beam (20) remitted by objects (48) in the passage opening (40) as well as a movable deflection unit (16) for periodically scanning the passage opening (40).

13. A sensor (10) in accordance with any one of the preceding claims, which is configured as a 3D camera, in particular as a stereo camera having two image sensors and a stereoscopic unit in which a stereoscopic distance calculation can be carried out from image data of the two image sensors, or as a time of flight of light camera having a light transmitter, an image sensor and a time of flight of light measuring unit by means of which a time of flight of light between the transmission of a light beam by the light transmitter and the registration of the light beam in the pixel can be determined for each pixel of the image sensor.

14. A method of securing a passage opening (40) in which depth resolved image information of an object (48) moved through the passage opening (40) is acquired section-wise and in real time with the help of a distance-measuring optoelectronic sensor (10), wherein the image information is compared with reference contour information of known objects (50) to decide whether an object (48) to be checked which is located in the passage opening (40) is permitted there, and wherein a securing signal is output when the object (48) to be checked is not permitted in the passage opening (40),
**characterised in that**
it is first assumed for the known permitted objects that they coincide with an object to be checked in the passage opening; **in that** a respective contour of the object section currently passing the sensor (10) is repeatedly compared during the movement of the object (48) through the passage opening (40), with the reference contours of all known objects (50), which can still be considered for the identity of the object (48) to be checked, for as long as the object (48) has not yet passed the passage opening (40) and in each case those known objects (50) are excluded for which the comparison of the image information and the reference information produces differences beyond a tolerance threshold; and **in that** no securing signal is output for as long as at least one known permitted object (50) can still be considered, with a known object being considered when it has not yet been excluded.

## Revendications

1. Capteur optoélectronique (10) mesurant l'éloignement, destiné au montage sur une ouverture traversante (40), qui est réalisé pour tenir en temps réel des informations d'images à résolution en profondeur du tronçon d'un objet (28) déplacé à travers l'ouverture traversante (40), qui se trouve respectivement dans la zone de détection du capteur (10), comprenant une unité à mémoire (32) qui contient plusieurs objets connus (50) et des informations sur leurs contours de référence, et comprenant une unité d'évaluation (30) qui est réalisée pour comparer les informations d'images et les informations de contours de référence afin de décider si un objet à contrôler (48) qui se trouve dans l'ouverture traversante (40) est admissible à cet endroit, dans lequel le capteur (10) comprend une sortie de sécurité (34) via laquelle un signal de sécurisation peut être délivré quand l'objet à contrôler (48) n'est pas admissible dans l'ouverture traversante (40),
**caractérisé en ce que**
l'unité d'évaluation (30) est réalisée pour supposer tout d'abord, pour les objets admissibles connus, qu'ils coïncident avec un objet à contrôler dans l'ouverture traversante et, pendant le déplacement de l'objet (48) à travers l'ouverture traversante (40), pour comparer de manière répétée, aussi longtemps que l'objet (48) n'a pas encore passé l'ouverture traversante (40), un contour respectif du tronçon d'objet qui passe actuellement devant le capteur (10) avec les contours de référence de tous les objets connus (50) qui entrent encore en ligne de compte pour l'identité de l'objet à contrôler (48), et pour exclure respectivement ceux des objets connus (50) pour lesquels la comparaison des informations d'images et des informations de contours de référence révèlent des différences au-delà d'un seuil de tolérance, et elle ne délivre aucun signal de sécurisation aussi longtemps que pour l'objet à contrôler (48) au moins un objet admissible connu (50) entre encore en ligne de compte, dans lequel un objet connu entre en ligne de compte lorsqu'il n'a pas encore été exclu.

2. Capteur (10) selon la revendication 1,
dans lequel l'unité d'évaluation (30) est réalisée, dans une présélection, pour exclure au préalable des objets connus (50) comme coïncidant avec l'objet à contrôler (48).

3. Capteur (10) selon la revendication 2,
dans lequel l'unité d'évaluation (30) est réalisée pour effectuer la présélection indépendamment des informations d'image de l'objet à contrôler (48).

4. Capteur (10) selon l'une des revendications précédentes,
dans lequel l'unité d'évaluation (30) est réalisée, lors de la comparaison des informations d'image et des informations de contours de référence, pour déterminer un degré de coïncidence.

5. Capteur (10) selon la revendication 4,
dans lequel l'unité d'évaluation (30) est réalisée, lors d'un dépassement d'un seuil de similitude minimum du degré de coïncidence pour un objet connu (50), pour exclure la totalité des autres objets connus (50).

6. Capteur (10) selon l'une des revendications précédentes,
dans lequel unité d'évaluation (30) est réalisée, lors de la comparaison des informations d'image avec les informations de contours de référence, pour tenir compte de déplacements et/ou de rotations entre l'objet connu (50) et l'objet à contrôler (48).

7. Capteur (10) selon l'une des revendications précédentes,
dans lequel il est prévu un capteur de vitesse afin de déterminer le profil de déplacement de l'objet (48) à travers l'ouverture traversante (50), ou dans lequel un profil de déplacement de l'objet (48) est imposé à l'unité d'évaluation (30).

8. Capteur (10) selon l'une des revendications précédentes,
dans lequel l'unité d'évaluation (30) est réalisée pour un mode d'apprentissage dans lequel des objets (48) sont déplacés à travers l'ouverture traversante (40), qui sont alors mémorisées dans l'unité à mémoire (32) à titre d'objets connus (50) avec des informations de contours de référence engendrées à partir d'informations d'image enregistrées pendant le déplacement.

9. Capteur (10) selon l'une des revendications précédentes,
dans le lequel le capteur (10) comprend une entrée pour un signal de passage, au moyen duquel il est possible de signaliser des fenêtres temporelles dans lesquelles aucun objet admissible (50) n'est attendu dans l'ouverture traversante (40).

10. Capteur (10) selon l'une des revendications précédentes,
dans lequel l'unité d'évaluation (30) est réalisée pour mémoriser les informations d'image d'un tronçon d'objet respectif, et ainsi pour composer morceau par morceau des informations d'image de parts d'un objet qui sont déjà passées à travers l'ouverture traversante (40).

11. Capteur (10) selon l'une des revendications précédentes,
dans lequel une sortie d'objet ou un affichage est prévu, afin d'indiquer, pour un objet (48) déplacé à travers l'ouverture traversante (40), tous les objets connus (50) entrant encore en ligne de compte pour l'objet à contrôler (48) et/ou l'objet connu (50) le plus vraisemblable.

12. Capteur (10) selon l'une des revendications précédentes,
qui est réalisé sous forme de scanner à laser et comprend un émetteur de lumière (12) pour émettre un rayon lumineux (14) jusque dans l'ouverture traversante (40), un récepteur de lumière (24) pour engendrer un signal de réception à partir du rayon lumineux (20) réémis par des objets (48) dans l'ouverture traversante (40), ainsi qu'une unité de déflexion mobile (16) pour palper périodiquement l'ouverture traversante (40).

13. Capteur (10) selon l'une des revendications précédentes,
qui est réalisé sous forme de caméra 3D, en particulier de caméra stéréoscopique avec deux capteurs d'image et une unité stéréoscopique, dans laquelle il est possible d'exécuter un calcul d'éloignement stéréoscopique à partir des données d'images des deux capteurs d'image, ou sous forme de caméra à temps de parcours de lumière comprenant un émetteur de lumière, un capteur d'image et une unité de mesure de temps de parcours de lumière au moyen de laquelle il est possible de déterminer, pour chaque pixel du capteur d'image, un temps de parcours de lumière entre l'émission d'un rayon de lumière par l'émetteur de lumière et l'enregistrement du rayon de lumière dans le pixel.

14. Procédé pour la sécurisation d'une ouverture traversante (40), dans lequel on obtient par tronçon et en temps réel, à l'aide d'un capteur optoélectronique (10) mesurant l'éloignement, des informations d'image à résolution en profondeur d'un objet (48) déplacé à travers l'ouverture traversante (40), dans lequel les informations d'image sont comparées avec des informations de contours de référence d'objets connus (50) afin de décider si un objet à contrôler (48) qui se trouve dans l'ouverture traversante (40) est admissible à cet endroit, et dans lequel on délivre un signal de sécurisation quand l'objet à contrôler (48) n'est pas admissible dans l'ouverture traversante (40),
**caractérisé en ce que**, pour les objets admissibles connus, on suppose tout d'abord qu'ils coïncident avec un objet à contrôler dans l'ouverture traversante, **en ce que** pendant le déplacement de l'objet (48) à travers l'ouverture traversante (40) on compare de façon répétée et aussi longtemps que l'objet (48) n'a pas passé l'ouverture traversante (40), un contour respectif du tronçon d'objet qui passe actuellement le capteur (10) avec les contours de référence de tous les objets connus (50) qui entrent encore en ligne de compte pour l'identité de l'objet à contrôler (48) et l'on exclut respectivement ceux des objets connus (50) pour lesquels la comparaison des informations d'images et des informations de contours de référence révèlent des différences au-delà d'un seuil de tolérance, et **en ce que** l'on ne délivre aucun signal de sécurisation aussi longtemps qu'au moins un objet admissible connu (50) entre en ligne de compte pour l'objet à contrôler (48), et un objet connu entre en ligne de compte lorsqu'il n'a pas encore été exclu.
